# FASCICULE DE BREVET EUROPEEN

(11) **EP 1 982 820 B1**
(45) Date de publication et mention de la délivrance du brevet: **22.09.2010**
(21) Numéro de dépôt: 08154668.1
(22) Date de dépôt: 17.04.2008
(51) Int. Cl.: B29C 49/46, B29C 49/42, B29C 49/36

(54) **Installation pour la fabrication de récipients comportant une enceinte de protection équipée d'un système d'insufflation d'air filtré**
Vorrichtung zum Herstellen von Behältern mit einem mit einem System zum Einblasen von gefilterter Luft versehenen Schutzgehäuse
Installation for the manufacture of containers comprising a secure enclosure provided with a system for the insufflation of filtered air

(30) Priorité: 20.04.2007 FR 0754594
(43) Date de publication de la demande: 22.10.2008
(73) Titulaire: Sidel Participations, 76930 Octeville Sur Mer (FR)
(72) Inventeur: Adriansens, Eric, 76930 Octeville sur Mer (FR); Quetel, François, 76930 Octeville sur Mer (FR)
(74) Mandataire: Thibaudeau, David A. C. R.

(56) Documents cités:
- FR-A- 2 766 121
- FR-A- 2 859 199
- FR-A- 2 859 200
- US-A- 4 880 581

## Description

La présente invention concerne une installation pour la fabrication de récipients comportant une enceinte de protection équipée d'un système d'insufflation d'air filtré.

L'invention concerne plus particulièrement une installation pour la fabrication de récipients, notamment de bouteilles, par soufflage ou par étirage-soufflage à partir d'une préforme en matière thermoplastique, l'installation comportant au moins :
- un dispositif d'alimentation en préformes destiné à alimenter en préformes une entrée de l'installation,
- une unité de conditionnement thermique comportant au moins un four comprenant des moyens de chauffage des préformes qui sont agencés entre une zone d'entrée dans laquelle les préformes sont amenées par le dispositif d'alimentation et une zone de sortie qui débouche dans une zone, dite de transfert, de l'installation,
- un premier dispositif de transfert qui, agencé dans la zone de transfert, est destiné à transférer les préformes conditionnées thermiquement depuis la zone de sortie du four jusqu'à une zone, dite d'alimentation, d'une unité de moulage,
- l'unité de moulage comportant une roue équipée d'une pluralité de moules répartis circonférentiellement et des moyens associés de soufflage ou d'étirage-soufflage, la roue étant entraînée en rotation de manière que chaque moule parcourt un cycle de transformation depuis ladite zone d'alimentation jusqu'à une zone, dite d'évacuation,
- un deuxième dispositif de transfert qui, agencé dans la zone de transfert, est destiné à transférer les récipients obtenus depuis la zone d'évacuation de l'unité de moulage jusqu'à une sortie de l'installation, et
- au moins une enceinte de protection formant un caisson disposé de manière à entourer au moins l'unité de moulage, la zone de transfert et la zone de sortie du four de l'installation, l'enceinte délimitant notamment autour de la roue une zone périphérique en "U" qui, s'étendant depuis la zone d'alimentation jusqu'à la zone d'évacuation, comporte successivement une première zone, dite latérale droite, une deuxième zone, dite arrière, une troisième zone, latérale gauche.

On connaît de nombreuses installations de ce type pour la fabrication de récipients (voir par exemple le document FR 2 766 121 A) dans lesquelles l'enceinte de protection comporte généralement des parois verticales et au moins une paroi horizontale formant plafond de manière à former un caisson disposé de manière à entourer au moins l'unité de moulage, la zone de transfert et la zone de sortie du four de l'installation.

L'enceinte de protection est notamment destinée à assurer une séparation physique "homme-machine" pour des raisons de sécurité de fonctionnement, ainsi qu'une isolation acoustique afin de respecter les réglementations en vigueur.

Une telle enceinte n'est pour autant pas étanche et il existe une possible circulation d'air, bien que réduite, entre l'environnement extérieur et le volume intérieur délimité par l'enceinte. Or, l'air en libre circulation est susceptible d'être porteur de contaminations particulaires, telles que des germes, des spores ou des bactéries.

De manière connue, l'installation comporte généralement des moyens de stérilisation des préformes qui sont destinés à décontaminer les préformes avant et/ou pendant leur conditionnement thermique dans le four mais ne comporte en revanche pas de moyens de stérilisation ou d'aseptisation particuliers qui soient associés à l'unité de soufflage.

En effet, les préformes sont soufflées au moyen d'air stérile et chaque préforme se trouve, au cours du cycle de sa transformation en récipient, introduite à l'intérieur d'un moule qui l'isole donc en se refermant et la protège des risques de contaminations particulaires aéroportées.

Ainsi, il est constant pour un homme du métier que les préformes ne sont pas exposées à des risques de contaminations dans cette partie de l'installation et la partie de l'installation de fabrication de récipients située en aval du four est dès lors usuellement dépourvue de moyens de stérilisation ou d'aseptisation particuliers.

Toutefois, à l'encontre des préjugés de l'homme du métier, on a constaté que les récipients obtenus avec les installations de dernières générations fonctionnant à hautes cadences présentaient de manière surprenante des taux de contaminations particulaires supérieures aux valeurs de seuil auparavant habituellement constatées et cela sans toutefois que l'origine de ces contaminations puisse être expliquée.

C'est la raison pour laquelle, la Demanderesse a procédé à des études et des essais afin d'en établir l'origine. Bien entendu, l'hypothèse selon laquelle la contamination des préformes aurait pour origine une déficience des moyens de stérilisation a été écartée, l'origine de ces taux de contamination devant par conséquent être recherchée ailleurs.

Des essais mis en oeuvre par la Demanderesse lui ont permis d'une part de constater que la contamination particulaire des préformes survenait de manière surprenante en amont de la zone d'alimentation, en particulier dans la zone de sortie du four et, d'autre part, d'établir une corrélation entre l'augmentation du taux de contamination et l'utilisation de vitesse de rotation élevée de la roue de l'unité de moulage/soufflage.

On rappellera à cet égard que, pour de telles installations, les cadences de production n'ont cessées de croître ainsi la vitesse de rotation de la roue de l'unité de soufflage atteint aujourd'hui des vitesses de l'ordre de 20 à 40 tours / minute pour une roue présentant un diamètre compris entre 1 et 4 mètres.

Dans les installations fonctionnant à très hautes cadences, la roue provoque donc du fait de sa vitesse de rotation d'importants phénomènes aérodynamiques à l'intérieur de l'enceinte.

Des études de ces phénomènes ont notamment permis à la Demanderesse de mettre en évidence le fait que, en fonctionnement à hautes cadences, la roue agit comme un ventilateur qui provoque un important courant d'air, lequel courant d'air parcourt successivement la zone périphérique entourant la roue, puis la zone de transfert et enfin la zone de sortie du four avant d'être majoritairement évacué hors de l'installation par la partie supérieure ouverte du four.

La Demanderesse a ainsi pu établir que l'origine des contaminations particulaires était en relation directe avec le courant d'air provoqué par la rotation de la roue à hautes vitesses.

En effet, les particules telles que les germes, bactéries, etc. sont alors susceptibles d'être transportées par ce courant d'air depuis la partie de l'installation comportant l'unité de moulage/soufflage et les dispositifs de transfert jusqu'au four dont la partie supérieure forme une cheminée par laquelle s'évacue majoritairement le courant d'air.

C'est la raison pour laquelle, tant le corps que le col de la préforme sont en particulier susceptibles d'être contaminées dans la zone de sortie du four, lorsque les préformes défilant d'amont vers l'aval sont successivement léchées par le courant d'air susceptible d'être porteur des contaminations particulaires.

La présente invention vise notamment à résoudre les inconvénients précités et tout particulièrement à remédier aux risques de contaminations particulaires aéroportées par le courant d'air provoqué par la rotation à hautes vitesses de la roue de l'unité de moulage.

Dans ce but, l'invention propose une installation pour la fabrication de récipients du type décrit précédemment, caractérisée en ce que l'installation comporte un système d'insufflation d'air filtré à l'intérieur de l'enceinte pour y établir une surpression en y projetant un flux d'air qui est introduit sélectivement dans au moins ladite première zone de manière que le courant d'air provoqué par la rotation de la roue soit constitué dudit air filtré pour éviter les risques de contaminations particulaires aéroportées, en particulier la contamination des préformes dans la zone de sortie du four.

Selon l'invention, la première zone Z1 correspond à la zone du volume intérieur de l'enceinte qui s'étend transversalement vers l'arrière à partir de la zone d'alimentation de l'unité de moulage, qui s'étend verticalement du sol au plafond de l'enceinte et qui est comprise longitudinalement entre une partie latérale de la roue portant les moules et la paroi de l'enceinte située en vis-à-vis, ladite première zone Z1 étant la zone dans laquelle prend naissance le courant d'air induit par la rotation de la roue dont les moules brassent l'air comme le font par analogie les pales d'un ventilateur.

Grâce à l'invention, le courant d'air provoqué par la rotation de la roue est essentiellement constitué par de l'air filtré qui est introduit à l'intérieur de l'enceinte par le système d'insufflation de sorte que l'état d'hygiène général de l'installation s'en trouve amélioré, permettant de fabriquer à hautes cadences des récipients aseptisés ou stériles conformes aux exigences usuelles en terme de contamination particulaire.

Avantageusement, l'air formant ledit courant qui se crée et s'enroule autour de la roue suivant le sens de rotation de celle-ci, avant de balayer successivement la zone de transfert puis la zone de sortie du four, est un air filtré ou stérilisé dépourvu de particules, telles que des bactéries ou des germes.

Par conséquent, le courant d'air est uniquement constituée d'air "propre" insufflé dont la qualité est contrôlée et qui n'est dès lors plus susceptible de contaminer les préformes ou les récipients, notamment les préformes dans la zone de sortie du four.

Selon d'autres caractéristiques de l'invention :
- le système d'insufflation d'air est apte à projeter un flux d'air filtré dans la deuxième zone et/ou la troisième zone de l'enceinte qui, complémentaires de la première zone, définissent la zone périphérique entourant la roue ;
- le système d'insufflation d'air est apte à projeter un flux d'air filtré dans une quatrième zone de l'enceinte comportant au moins la zone de transfert et la zone de sortie du four ;
- le système d'insufflation d'air est apte à projeter en permanence un flux d'air filtré ou stérile dans tout ou partie des zones de l'enceinte, indépendamment de la mise en rotation de la roue, de manière à préserver le degré de d'hygiène à l'intérieur de l'enceinte en y maintenant une surpression lorsque la roue est à l'arrêt d'une part, et, à éviter la contamination particulaire du courant d'air provoqué, en fonctionnement, par la rotation de la roue qui agit comme un ventilateur d'autre part, ledit courant d'air constitué majoritairement dudit air filtré insufflé par le système parcourant successivement d'abord la zone périphérique constituée par lesdites première, deuxième et troisième zones puis la zone de transfert et enfin la zone de sortie du four ;
- le système d'insufflation d'air comporte des moyens de ventilation associés à des moyens de filtration qui sont destinés à filtrer l'air avant sa projection à l'intérieur de l'enceinte ;
- les moyens de filtration du système sont constitués par au moins un filtre de type « HEPA » ou « ULPA » ;
- le système d'insufflation d'air comporte au moins un élément qui est monté à l'extérieur de l'enceinte sur au moins l'une des parois verticales et/ou la paroi horizontale formant plafond, l'enceinte comportant des ouvertures pour permettre l'insufflation du flux d'air filtré suivant un flux initialement laminaire s'écoulant globalement verticalement de haut en bas ;
- les éléments du système d'insufflation sont intégrés structurellement à l'enceinte de manière à former la paroi constituant le plafond.

Avantageusement, l'installation est du type dans laquelle l'enceinte comporte un sas destiné à permettre à un opérateur d'accéder à l'intérieur de l'enceinte depuis l'extérieur de l'installation, notamment en vue de procéder à des opérations sur la roue telles que des réglages ou des changements de moules, et le système d'insufflation de l'installation est apte à projeter sélectivement un flux d'air filtré à l'intérieur du sas de manière à éviter toute contamination externe du volume intérieur délimité par l'enceinte lorsque le sas est utilisé.

De préférence, le sas est agencé dans la deuxième zone de la zone périphérique qui est située en arrière de la roue et diamétralement opposée à la zone de transfert.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de dessus qui représente un exemple d'installation de fabrication de récipients comportant un système d'insufflation d'air filtré selon l'invention ;
- la figure 2 est une vue en coupe de la figure 1 selon le plan 2-2 qui représente l'unité de moulage/soufflage de l'installation et qui illustre l'implantation des éléments du système d'insufflation d'air filtré dans la partie supérieure de l'enceinte.

Dans la description et les revendications, on utilisera à titre non limitatif les termes "amont" et "aval", "avant" et "arrière", "supérieur" et "inférieur", "gauche" et "droite", etc. et les orientations "longitudinale", "verticale" et "transversale" pour désigner respectivement des éléments selon les définitions données dans la description et par rapport au trièdre (L, V, T) représenté sur les figures.

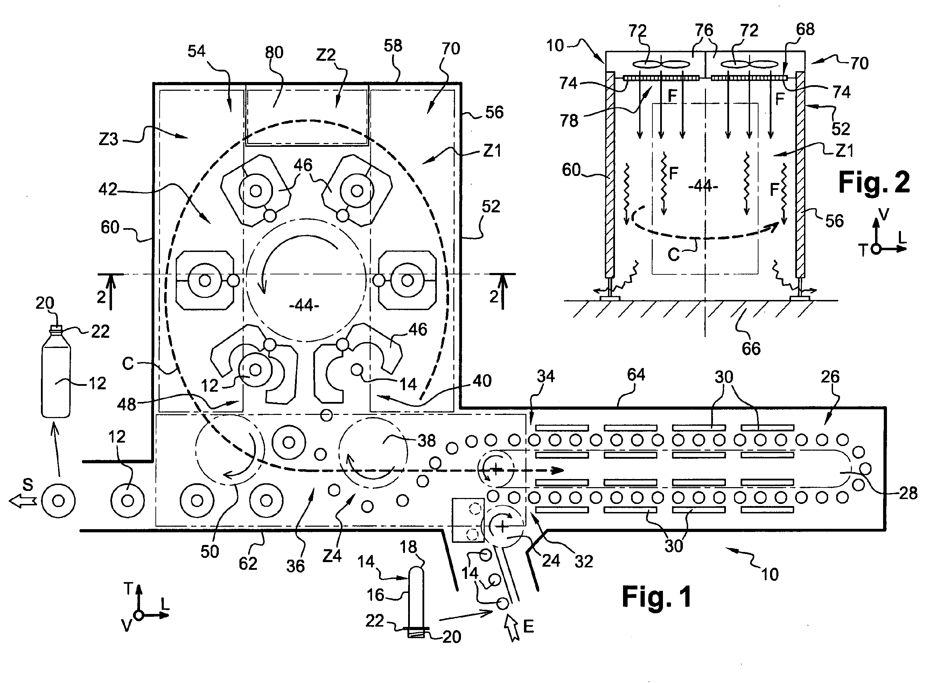

On a représenté schématiquement à la figure 1, une installation 10 pour la fabrication de récipients 12, notamment de bouteilles, par soufflage ou par étirage-soufflage à partir d'une préforme 14 en matière thermoplastique, par exemple en PET (Polyéthylène Téréphtalate).

On a représenté en détail sur la figure 1 un exemple de réalisation d'une préforme 14 destinée à la fabrication d'un récipient à corps creux, tel qu'une bouteille, un flacon etc., notamment par soufflage ou par étirage- soufflage.

Par définition, le terme "récipient" désigne dans la suite de la présente description aussi bien le récipient final, telle que la bouteille 12 illustrée en détail à la figure 1, qui est obtenu par un procédé de fabrication à une seule étape de soufflage d'une préforme aboutissant directement au récipient final qu'un récipient intermédiaire obtenus dans le cas de mise en oeuvre d'un procédé à plusieurs étapes de soufflage.

Les préformes 14 sont généralement réalisées selon un procédé de moulage par injection et sont par exemple moulées sur un autre lieu que celui où se trouve l'installation de fabrication des récipients.

Comme on peut mieux le voir sur le détail de la figure 1, la préforme 14 présente généralement un corps 16 globalement tubulaire, de section cylindrique suivant un plan de coupe horizontal, ledit corps 16 s'étendant selon un axe vertical, ici dans une position dite "col en bas".

La préforme 14 est fermée à son extrémité supérieure par un fond 18 sensiblement hémisphérique, qui correspond à la partie du corps de la préforme destinée à former le fond du récipient 12. A l'opposé, la préforme 14 est ouverte à son extrémité inférieure qui est conformée en un col 20 qui possède déjà la forme définitive du col ou goulot du récipient 12.

La préforme 14 comporte à la jonction entre le corps 16 et le col 20, une collerette 22 qui s'étend radialement vers l'extérieur en saillie par rapport au corps 16 et au col 20.

Le col 20 délimite une ouverture annulaire centrée sur l'axe vertical et il comporte par exemple sur sa surface externe un filetage destiné à permettre la mise en place ultérieure de moyens de fermeture à vis du récipient 12, tels qu'un bouchon (non représenté).

En variante, le col 20 comporte sur sa surface externe des moyens d'accrochage destinés à permettre la mise en place ultérieure de moyens complémentaire de fermeture du récipient 12 du type à encliqueter ou à sceller tels qu'un opercule en plastique ou en métal.

L'installation 10 de fabrication de récipients 12 comporte au moins un dispositif 24 d'alimentation en préformes 14 qui est destiné à alimenter en préformes, suivant la flèche, une entrée E de l'installation 10.

L'installation 10 comporte une unité de conditionnement thermique 26 comportant au moins un four 28 comprenant des moyens de chauffage 30 des préformes 14 qui sont agencés entre une zone d'entrée 32 dans laquelle les préformes 14 sont amenées par le dispositif d'alimentation 24 et une zone de sortie 34 qui débouche dans une zone 36, dite de transfert, de l'installation 10.

De préférence, l'installation 10 comporte un premier dispositif de transfert 38 qui, agencé dans la zone de transfert 36, est destiné à transférer les préformes 14 conditionnées thermiquement depuis la zone de sortie 34 du four 28 jusqu'à une zone 40, dite d'alimentation, d'une unité de moulage 42.

L'unité de moulage 42 comporte une roue 44 équipée d'une pluralité de moules 46 répartis circonférentiellement et des moyens (non représentés) associés de soufflage ou d'étirage-soufflage.

De préférence, chaque moule 46 est un moule dit "en portefeuille" qui comporte une empreinte correspondant au récipient 12 à fabriquer, par exemple une bouteille.

En variante, chaque moule 46 comporte au moins deux empreintes de manière à fabriquer simultanément deux récipients 12 à partir de deux préformes 14.

La roue 44 est entraînée en rotation de manière que chaque moule 46 parcourt un cycle de transformation depuis ladite zone d'alimentation 40 jusqu'à une zone 48, dite d'évacuation.

Le moule 46 de la roue 44 positionné dans la zone d'alimentation 40 est ouvert de manière à permettre l'introduction de la préforme 14 préalablement conditionnée thermiquement par le four 28, puis fermé au cours de cycle de transformation de la préforme 14 par soufflage qui s'opère parallèlement à la rotation de la roue 44 jusqu'à ce que le moule 46 atteigne la zone d'évacuation 48 où il est à nouveau ouvert pour permettre l'évacuation du récipient 12 obtenu.

Pour ce faire, l'installation 10 comporte un deuxième dispositif de transfert 50 qui, agencé dans la zone de transfert 36, est destiné à transférer les récipients 12 obtenus depuis la zone d'évacuation 48 de l'unité de moulage 42 jusqu'à une sortie S de l'installation 10 par laquelle les récipients 12 sont évacués.

L'installation 10 comporte au moins une enceinte de protection 52 formant un caisson disposé de manière à entourer au moins l'unité de moulage 42, la zone de transfert 36 et la zone de sortie 34 du four 28 de l'installation 10, ladite enceinte 52 délimitant ainsi un volume intérieur confiné autour des éléments constitutifs de l'installation 10.

De préférence, l'enceinte de protection 52 délimite notamment autour de la roue 44 une zone périphérique 54 en "U" qui s'étend depuis la zone d'alimentation 40 jusqu'à la zone d'évacuation 48.

La zone périphérique 54 comporte successivement une première zone Z1, dite latérale droite, une deuxième zone Z2, dite arrière, une troisième zone Z3, latérale gauche.

Chacune desdites zones Z1 à Z3 a été représentée en trait mixte sur la figure 1 pour y être matérialisée et correspond globalement à un volume de forme parallélépipédique.

De préférence, l'enceinte de protection 52 est constituée d'un ensemble de parois verticales formées par exemple par des panneaux et d'au moins une paroi horizontale formant plafond (figure 2) qui recouvre avantageusement l'unité de moulage 42, la zone de transfert 36 et la zone de sortie 34 du four 28 de l'installation 10.

De préférence, le four 28 de l'unité de conditionnement thermique 26 est ouvert verticalement vers le haut.

L'enceinte de protection 52 comporte principalement une partie entourant l'unité de moulage 42 et constituée par une paroi transversale droite 56 qui est adjacente à la zone d'alimentation 40 et à la zone de sortie 34, une paroi longitudinale arrière 58 et une paroi transversale gauche 60.

L'enceinte 52 comporte encore une paroi longitudinale avant 62, globalement parallèle à la paroi 58, qui s'étendant transversalement en avant de la roue 44 délimite en partie la zone de transfert 36 comportant les dispositifs de transfert 38 et 50.

L'enceinte 52 comporte enfin une partie comportant un ensemble de parois 64 en "U" entourant le four 28 qui forme un tunnel s'étendant longitudinalement, l'ensemble de parois 64 délimitant avec la paroi longitudinale avant 62 un passage constituant l'entrée E de l'installation 10 et rejoignant la paroi transversale droite 56 pour fermer l'enceinte 52.

L'ensemble de parois 64 débouche longitudinalement en bout du côté de la zone de sortie 34 du four 28, qui est contiguë à la zone de transfert 36.

La paroi transversale gauche 60 et la paroi longitudinale avant 62 délimitent un passage formant la sortie S qui, adjacente au deuxième dispositif de transfert 50, est destinée à permettre l'évacuation des récipients 12 hors de l'installation 10.

La première zone Z1 s'étend latéralement à droite de la roue 44, plus précisément s'étend longitudinalement entre la roue 44 et la paroi transversale droite 56 en vis-à-vis, transversalement de la zone d'alimentation 40 à la paroi longitudinale arrière 58 et verticalement du sol 66 sur lequel repose l'enceinte 52 jusqu'à une paroi 68 (voir figure 2) formant le plafond de l'enceinte 52.

La deuxième zone Z2 s'étend longitudinalement en arrière de la roue 44 et est comprise transversalement entre la roue 44 et la paroi longitudinale arrière 58 de l'enceinte 52 à l'exclusion des parties comprises dans les première et troisième zones Z1 et Z3.

La troisième zone Z3 s'étend latéralement à gauche de la roue 44, plus précisément s'étend longitudinalement entre la roue 44 et la paroi transversale gauche 60 en vis-à-vis, transversalement de la paroi longitudinale arrière 58 à la zone d'évacuation 48 et verticalement du sol 66 sur lequel repose l'enceinte 52 jusqu'à la paroi 68 formant le plafond de l'enceinte 52.

Comme cela a été expliqué en préambule, lorsque la roue 44 est entraînée en rotation à des vitesses élevées, elle se comporte comme un ventilateur dont les pales seraient formées par les moules 46 et provoque, à l'intérieur du volume confiné délimité par l'enceinte 52, un important courant d'air C qui est représenté sur les figures 1 et 2 par une flèche associée.

Or, un tel courant d'air C est susceptible de transporter des contaminations particulaires présentes notamment dans la zone de l'enceinte 52 comportant l'unité de moulage 42 ou les dispositifs de transfert 38, 50 jusqu'au préformes 14 se trouvant dans la zone de sortie 34 et dans le four 28.

Conformément à l'invention, l'installation 10 comporte un système 70 d'insufflation d'air filtré à l'intérieur de l'enceinte 52 pour y établir une surpression en y projetant un flux d'air F qui est introduit sélectivement dans au moins ladite première zone Z1 de manière que, notamment en fonctionnement, le courant d'air provoqué par la rotation de la roue soit constitué dudit air filtré pour éviter les risques de contaminations particulaires aéroportées, en particulier la contamination des préformes dans la zone de sortie du four.

Par conséquent, le courant d'air C provoqué en fonctionnement par la rotation de la roue 44 est essentiellement ou exclusivement constitué par de l'air filtré qui est introduit à l'intérieur de l'enceinte 52 par le système d'insufflation 70.

Avantageusement, le système d'insufflation 70 fonctionne de manière permanente, indépendamment de la mise en rotation ou non de la roue et donc de la présence du courant d'air C, de manière à préserver un degré élevé d'hygiène à l'intérieur de l'enceinte 52 en y maintenant la surpression par insufflation d'air filtré ou stérile lorsque l'installation est à l'arrêt.

Grâce à l'invention, l'état d'hygiène général de l'installation 10 est amélioré et l'installation 10 est susceptible de fabriquer, à hautes cadences, des récipients 12 aseptisés ou stériles qui sont conformes aux exigences usuelles en terme de contamination particulaire.

Avantageusement, après s'être créé et enroulé autour de la roue 44 suivant le sens antihoraire de rotation de cette dernière, ledit courant d'air C qui va successivement balayer longitudinalement la zone de transfert 36 puis la zone de sortie 34 du four 28, est constitué d'air filtré, voir stérile, qui est dépourvu de particules, en particulier de bactéries, de spores ou de germes.

Avantageusement, le système d'insufflation 70 fonctionnant en permanence le volume intérieur de l'enceinte 52 et tout ce qui s'y trouve présentent un degré d'hygiène contrôlé, c'est-à-dire un taux très faible de particules de manière à prévenir tout risque de contamination particulaire du flux d'air filtré ou stérile projeté par le système ou encore du courant d'air C par des particules qui seraient présentes à l'intérieur de l'enceinte 52.

En effet, l'établissement d'une surpression à l'intérieur de l'enceinte 52 permet de garantir en permanence qu'aucune pénétration d'air potentiellement pathogène ne se produise depuis l'extérieur vers l'intérieur de l'enceinte 52 et cela que la roue 44 soit ou non en rotation.

En effet, lorsque le système d'insufflation est en fonctionnement, les risques de contamination particulaire externe du volume intérieur délimité par l'enceinte sont supprimés et l'air présent dans l'enceinte 52 est uniquement constitué d'air filtré qui s'évacue de l'intérieur de l'enceinte vers l'extérieur de l'installation 10 du fait de la surpression établie par les moyens 70.

C'est en particulier pour ces raisons que le courant d'air C n'est plus susceptible de contaminer l'installation 10 et notamment les préformes 14 dans la zone de sortie 34 du four 28.

Avantageusement, on procède à une décontamination, par exemple chimique, du volume intérieur de l'enceinte 52 avant la mise en fonctionnement du système d'insufflation 70 de l'installation 10.

De préférence, le système d'insufflation 70 fonctionne en continu, indépendamment de la roue 44 de l'installation 10, de manière à maintenir en permanence l'hygiène de l'installation 10 et en particulier de la partie comportant l'unité de moulage 42, les dispositifs de transfert 38, 50 et la zone de sortie du four 28.

Avantageusement, le système d'insufflation d'air filtré 70 est encore apte à projeter un flux F d'air filtré dans la deuxième zone Z2 et/ou la troisième zone Z3 de l'enceinte 52 qui, complémentaires de la première zone Z1, définissent notamment la zone périphérique 54 entourant la roue 44 de l'unité de moulage 42.

De préférence, le système d'insufflation d'air 70 est apte à projeter un flux F d'air filtré dans une quatrième zone Z4 de l'enceinte 52 qui est définie comme comportant au moins la zone de transfert 36 dans laquelle sont agencés les premier et deuxième dispositifs de transfert 38 et 50 et qui comporte encore avantageusement aussi la zone de sortie 34 du four 28.

Avantageusement, le système d'insufflation 70 fonctionne en permanence au moins dans la quatrième zone Z4 de l'enceinte 52 comportant notamment les dispositifs de transfert 38 et 50.

Ainsi, indépendamment de la mise en rotation de la roue 44 de l'installation 10, le degré d'hygiène ou de propreté est toujours maintenu en particulier dans ladite zone Z4 au voisinage de laquelle les moules sont ouverts à l'arrêt de l'installation 10 comme en fonctionnement pour procéder respectivement à l'alimentation en préformes et à l'évacuation des récipients dans les zones éponymes 40 et 48.

Avantageusement, le système d'insufflation d'air 70 est donc apte à projeter sélectivement un flux laminaire F d'air filtré ou stérile dans tout ou partie des zones Z1, Z2, Z3 et Z4 correspondant au volume intérieur délimité par l'enceinte 52, indépendamment de la mise en rotation de la roue 44.

Grâce au système d'insufflation 70 selon l'invention, à l'arrêt de la roue 44, un degré de propreté dans le volume intérieur est préservé de manière que les zones Z1 à Z4 soient "propres", c'est-à-dire présentent un taux de contamination particulaire avantageusement inférieur ou égal au taux de contamination du courant d'air C constitué principalement d'air filtré ou stérile insufflé par le système 70 et qui, provoqué en fonctionnement par la rotation de la roue 44, parcourent successivement lesdites zones Z1 à Z4.

On a déterminé que le courant d'air C prenait naissance au voisinage de la zone d'alimentation 40 avant de parcourir successivement la zone périphérique 54 constituée par lesdites première, deuxième et troisième zones Z1 à Z3 puis la zone de transfert 36 et enfin au moins la zone de sortie 34 du four 28.

Avantageusement, le système d'insufflation d'air 70 comporte des moyens de ventilation 72 associés à des moyens de filtration 74 qui sont destinés à filtrer l'air avant sa projection à l'intérieur de l'enceinte 52 pour en éliminer les impuretés (poussières, ...) et tout particulièrement les particules contaminantes telles les bactéries, les germes, etc.

De préférence, les moyens de filtration 74 du système 70 sont constitués par au moins un filtre de type « ULPA » acronyme pour « *Ultra Low Penetration Air »* en anglais et qui est appelé en français : filtre à air à très faible pénétration.

En variante, les moyens de filtration 74 du système 70 sont constitués par au moins un filtre de type « HEPA » acronyme pour *« High Efficiency Particulate Air »* en anglais et qui est appelé en français : filtre à air à très haute efficacité.

Selon un mode de réalisation préféré de l'invention illustré à la figure 2, le système d'insufflation d'air 70 comporte des éléments ou blocs 76 qui sont montés à l'extérieur de l'enceinte 52 sur la paroi horizontale 68 formant plafond, l'enceinte 52 comportant des ouvertures 78 pour permettre le passage du flux F d'air filtré, insufflé suivant un flux initialement laminaire qui s'écoule globalement verticalement de haut en bas avant que ledit flux ne rencontre le courant d'air C.

Avantageusement, les éléments 76 du système d'insufflation 70 comportent les moyens de ventilation 72 et les moyens de filtration 74 et sont disposés sélectivement au moins au dessus de l'une des zones Z1, Z2, Z3 et Z4.

De préférence, les éléments 76 du système d'insufflation 70 sont intégrés structurellement à l'enceinte 52 de manière à en former la paroi horizontale 68 de plafond et à insuffler de l'air filtré ou stérile dans volume intérieur délimité par l'enceinte 52 pour couvrir l'ensemble des zones Z1 à Z4.

L'intégration du système d'insufflation 70 est avantageusement prévue dès la conception de l'installation 10 mais il est aussi possible d'équiper facilement une installation existante en vue d'en améliorer l'hygiène générale et la qualité des récipients 12 fabriqués.

Ainsi, les éléments 76 du système d'insufflation 70 sont encore susceptibles d'être rapportés à fixation sur au moins l'une des parois verticales de l'enceinte 52.

De préférence, l'enceinte 52 de l'installation 10 comporte un sas 80 destiné à permettre à un opérateur d'accéder à l'intérieur de l'enceinte 52 depuis l'extérieur de l'installation 10.

L'aménagement d'un tel sas 80 dans l'enceinte 52 permet notamment de procéder à des interventions en particulier sur la roue 44 pour effectuer des opérations de réglages ou des changements de moules 46.

Avantageusement, le système d'insufflation 70 est encore susceptible d'insuffler un flux F d'air filtré à l'intérieur du sas 80 qui est de préférence agencé dans la deuxième zone Z2 de la zone périphérique 54 située en arrière de la roue 44 et diamétralement opposée à la zone de transfert 36.

En variante, l'installation 10 comporte des moyens supplémentaires d'insufflation dédiés au sas 80 et aptes à projeter un flux laminaire d'air filtré, notamment verticalement de haut en bas, de manière à préserver le degré d'hygiène du volume intérieur délimitée par l'enceinte 52 en évitant les risques de contaminations particulaires aéroportées en provenance de l'extérieur et de l'opérateur lorsque le sas 80 est utilisé.

## Revendications

1. Installation (10) pour la fabrication de récipients (12), notamment de bouteilles, par soufflage ou par étirage-soufflage à partir d'une préforme (14) en matière thermoplastique, comportant au moins :
- un dispositif (24) d'alimentation en préformes destiné à alimenter en préformes une entrée (E) de l'installation (10),
- une unité de conditionnement thermique (26) comportant au moins un four (28) comprenant des moyens de chauffage (30) des préformes (14) qui sont agencés entre une zone d'entrée (32) dans laquelle les préformes (14) sont amenées par le dispositif d'alimentation (24) et une zone de sortie (34) qui débouche dans une zone (36), dite de transfert, de l'installation (10),
- un premier dispositif de transfert (38) qui, agencé dans la zone de transfert (36), est destiné à transférer les préformes (14) conditionnées thermiquement depuis la zone de sortie (34) du four (28) jusqu'à une zone (40), dite d'alimentation, d'une unité de moulage (42),
- l'unité de moulage (42) comportant une roue (44) équipée d'une pluralité de moules (46) répartis circonférentiellement et des moyens associés de soufflage ou d'étirage-soufflage, la roue (44) étant entraînée en rotation de manière que chaque moule (46) parcourt un cycle de transformation depuis ladite zone d'alimentation (40) jusqu'à une zone (48), dite d'évacuation,
- un deuxième dispositif de transfert (50) qui, agencé dans la zone de transfert (36), est destiné à transférer les récipients (12) obtenus depuis la zone d'évacuation (48) de l'unité de moulage (42) jusqu'à une sortie (S) de l'installation (10), et
- au moins une enceinte de protection (52) formant un caisson disposé de manière à entourer au moins l'unité de moulage (42), la zone de transfert (36) et la zone de sortie (34) du four (28) de l'installation (10), l'enceinte (52) délimitant notamment autour de la roue (44) une zone périphérique (54) en "U" qui, s'étendant depuis la zone d'alimentation (40) jusqu'à la zone d'évacuation (48), comporte successivement une première zone (Z1), dite latérale droite, une deuxième zone (Z2), dite arrière, une troisième zone (Z3), latérale gauche,
comportant l'installation (10) un système (70) d'insufflation d'air filtré à l'intérieur de l'enceinte (52) pour y établir une surpression en y projetant un flux (F) d'air **caractérisé en ce que** le flux d'air est introduit sélectivement dans au moins la première zone (Z1) correspondant à la zone du volume intérieur de l'enceinte (52) dans laquelle prend naissance un courant d'air (C) induit par la rotation de la roue (44), ladite première zone (Z1) étant comprise longitudinalement entre une partie latérale de la roue (44) portant les moules (46) et une paroi (56) de l'enceinte (52) située en vis-à-vis, et s'étendant d'une part transversalement vers l'arrière à partir de la zone d'alimentation (40) de l'unité de moulage (42) et, d'autre part, verticalement du sol (66) au plafond (68) de l'enceinte (52), de manière que le courant d'air (C) provoqué par la rotation de la roue (44) soit constitué dudit air filtré pour éviter les risques de contaminations particulaires aéroportées, en particulier la contamination des préformes (14) dans la zone de sortie (34) du four (28).

2. Installation (10) selon la revendication 1, **caractérisée en ce que** le système d'insufflation d'air (70) est apte à projeter un flux (F) d'air filtré dans la deuxième zone (Z2) et/ou la troisième zone (Z3) de l'enceinte (52) qui, complémentaires de la première zone (Z1), définissent la zone périphérique (54) entourant la roue (44).

3. Installation (10) selon l'une des revendications 1 ou 2, **caractérisée en ce que** le système d'insufflation d'air (70) est apte à projeter un flux (F) d'air filtré dans une quatrième zone (Z4) de l'enceinte (52) comportant au moins la zone de transfert (36) et la zone de sortie (34) du four (28).

4. Installation (10) selon l'une quelconque des revendications 1 à 3, **caractérisée en ce que** le système d'insufflation d'air (70) est apte à projeter en permanence un flux (F) d'air filtré ou stérile dans tout ou partie des zones (Z1, Z2, Z3, Z4) de l'enceinte (52), indépendamment de la mise en rotation de la roue (44), de manière à préserver le degré de d'hygiène à l'intérieur de l'enceinte (52) en y maintenant une surpression lorsque la roue (44) est à l'arrêt d'une part, et, à éviter la contamination particulaire du courant d'air (C) provoqué, en fonctionnement, par la rotation de la roue (44) qui agit comme un ventilateur d'autre part, ledit courant d'air (C) constitué majoritairement dudit air filtré insufflé par le système (70) parcourant successivement d'abord la zone périphérique (54) constituée par lesdites première, deuxième et troisième zones (Z1), (Z2), et (Z3) puis la zone de transfert (36) et enfin la zone de sortie (34) du four (28).

5. Installation (10) selon l'une quelconque des revendications précédentes, **caractérisée en ce que** le système d'insufflation d'air (70) comporte des moyens de ventilation (72) associés à des moyens de filtration (74) qui sont destinés à filtrer l'air avant sa projection à l'intérieur de l'enceinte (52).

6. Installation (10) selon la revendication 5, **caractérisée en ce que** les moyens de filtration (74) du système (70) sont constitués par au moins un filtre de type « ULPA » ou « HEPA ».

7. Installation (10) selon l'une quelconque des revendications précédentes, **caractérisée en ce que** le système d'insufflation d'air (70) comporte au moins un élément (76) qui est monté à l'extérieur de l'enceinte (52) sur au moins l'une des parois verticales (56, 58, 60, 62) et/ou la paroi horizontale (68) formant plafond, l'enceinte (52) comportant des ouvertures (78) pour permettre l'insufflation du flux (F) d'air filtré suivant un flux initialement laminaire s'écoulant globalement verticalement de haut en bas.

8. Installation (10) selon la revendication 7, **caractérisée en ce que** les éléments (76) du système d'insufflation d'air (70) sont intégrés structurellement à l'enceinte (52) de manière à former la paroi (68) constituant le plafond.

9. Installation (10) selon l'une des revendications précédentes, dans laquelle l'enceinte (52) comporte un sas (80) destiné à permettre à un opérateur d'accéder à l'intérieur de l'enceinte (52) depuis l'extérieur de l'installation (10), notamment en vue de procéder à des opérations sur la roue (44) telles que des réglages ou des changements de moules (46),
**caractérisée en ce que** le système d'insufflation d'air (70) est apte à projeter sélectivement un flux (F) d'air filtré à l'intérieur du sas (80) de manière à éviter toute contamination externe du volume intérieur délimité par l'enceinte (52) lorsque le sas (80) est utilisé.

10. Installation (10) selon la revendication 9, **caractérisée en ce que** le sas (80) est agencé dans la deuxième zone (Z2) de la zone périphérique (54) qui est située en arrière de la roue (44) et diamétralement opposée à la zone de transfert (36).

## Claims

1. Installation (10) for the manufacture of containers (12), in particular bottles, by blow moulding or stretch blow moulding from a thermoplastic preform (14), comprising at least:
- a device (24) for supplying preforms intended for supplying preforms to an inlet (E) of the installation (10),
- a thermal conditioning unit (26) comprising at least one oven (28) comprising means (30) for heating the preforms (14) which are arranged between an inlet zone (32) into which the preforms (14) are fed by the supply device (24) and an outlet zone (34) which discharges into a zone (36) of the installation (10), known as the transfer zone
- a first transfer device (38) which, arranged in the transfer zone (36), is intended to transfer the thermally conditioned preforms (14) from the outlet zone (34) of the oven (28) to a zone (40), known as the supply zone, of a moulding unit (42),
- the moulding unit (42) comprising a wheel (44) provided with a plurality of moulds (46) distributed circumferentially and associated blow moulding or stretch blow moulding means, the wheel (44) being driven in rotation so that each mould (46) passes through a transformation cycle from said supply zone (40) to a zone (48), known as a discharge zone,
- a second transfer device (50) which, arranged in the transfer zone (36), is intended to transfer the containers (12) obtained from the discharge zone (48) of the moulding unit (42) to an outlet (S) of the installation (10), and
- at least one secure enclosure (52) forming a casing, arranged so as to surround at least the moulding unit (42), the transfer zone (36) and the outlet zone (34) of the oven (28) of the installation (10), the enclosure (52) defining in particular around the wheel (44) a peripheral U-shaped zone (54) which, extending from the supply zone (40) as far as the discharge zone (48), successively comprises a first zone (Z1) known as the right-hand lateral zone, a second zone (Z2) known as the rear zone, and a third zone (Z3) known as the lateral left-hand zone,
the installation (10) comprising a system (70) for the insufflation of filtered air inside the enclosure (52) to create an excess pressure therein by projecting a flow (F) of air therein,
**characterized in that** the flow of air is selectively introduced into at least the first zone (Z1) corresponding to the zone of the internal volume of the enclosure (52) in which a current of air (C) originates which is produced by the rotation of the wheel (44), said first zone (Z1) being encompassed longitudinally between a lateral part of the wheel (44) carrying the moulds (46) and an opposing wall (56) of the enclosure (52), and extending, on the one hand, transversely to the rear from the supply zone (40) of the moulding unit (42) and, on the other hand, vertically from the floor (66) to the ceiling (68) of the enclosure (52) so that the current of air (C) produced by the rotation of the wheel (44) is formed from said filtered air to avoid the risks of specific airborne contamination, in particular the contamination of the preforms (14) in the outlet zone (34) of the oven (28).

2. Installation (10) according to Claim 1, **characterized in that** the system for the insufflation of air (70) is capable of projecting a flow (F) of filtered air into the second zone (Z2) and/or the third zone (Z3) of the enclosure (52) which, complementary to the first zone (Z1), define the peripheral zone (54) surrounding the wheel (44).

3. Installation (10) according to one of Claims 1 or 2, **characterized in that** the system for the insufflation of air (70) is capable of projecting a flow (F) of filtered air into a fourth zone (Z4) of the enclosure (52) comprising at least the transfer zone (36) and the outlet zone (34) of the oven (28).

4. Installation (10) according to any one of Claims 1 to 3, **characterized in that** the system for the insufflation of air (70) is capable of continuously projecting a flow (F) of filtered or sterile air into all or part of the zones (Z1, Z2, Z3, Z4) of the enclosure (52) irrespective of the rotation of the wheel (44), so as to maintain the level of hygiene inside the enclosure (52) by maintaining an excess pressure therein when the wheel (44) is stationary, on the one hand, and to avoid the specific contamination of the current of air (C) produced, during operation, by the rotation of the wheel (44) which acts as a fan, on the other hand, said current of air (C) consisting mostly of said filtered air insufflated by the system (70) passing successively through firstly the peripheral zone (54) formed by said first, second and third zones (Z1), (Z2) and (Z3), then the transfer zone (36) and finally the outlet zone (34) of the oven (28).

5. Installation (10) according to any one of the preceding claims, **characterized in that** the system for the insufflation of air (70) comprises ventilation means (72) associated with filtering means (74) which are intended to filter the air before its projection inside the enclosure (52).

6. Installation (10) according to Claim 5, **characterized in that** the filtering means (74) of the system (70) consist of at least one filter of the "ULPA" or "HEPA" type.

7. Installation (10) according to any one of the preceding claims, **characterized in that** the system for the insufflation of air (70) comprises at least one element (76) which is mounted outside the enclosure (52) on at least one of the vertical walls (56, 58, 60, 62) and/or the horizontal wall (68) forming the ceiling, the enclosure (52) comprising openings (78) to allow the insufflation of the flow (F) of filtered air following an initially laminar flow generally flowing vertically from top to bottom.

8. Installation (10) according to Claim 7, **characterized in that** the elements (76) of the system for the insufflation of air (70) are structurally integrated in the enclosure (52) so as to form the wall (68) constituting the ceiling.

9. Installation (10) according to one of the preceding claims, in which the enclosure (52) comprises an airlock (80) intended to allow an operator to access the inside of the enclosure (52) from the outside of the installation (10), in particular in order to carry out operations on the wheel (44), such as adjustments or changing the moulds (46),
**characterized in that** the system for the insufflation of air (70) is capable of selectively projecting a flow (F) of filtered air inside the airlock (80) so as to avoid any external contamination of the internal volume defined by the enclosure (52) when the airlock (80) is used.

10. Installation (10) according to Claim 9, **characterized in that** the airlock (80) is arranged in the second zone (Z2) of the peripheral zone (54) which is located to the rear of the wheel (44) and diametrically opposed to the transfer zone (36).

## Patentansprüche

1. Anlage (10) für die Herstellung von Aufnahmebehältern (12), insbesondere von Flaschen, durch Blasen oder Ziehblasen ausgehend von einem Vorformling (14) aus thermoplastischem Material, die wenigstens umfasst:
- eine Vorrichtung (24) für die Versorgung mit Vorformlingen, die dazu bestimmt ist, einen Eingang (E) der Anlage (10) mit Vorformlingen zu versorgen,
- eine Wärmekonditionierungseinheit (26), die wenigstens einen Ofen (28) enthält, der Mittel (30) zum Erhitzen der Vorformlinge (14) umfasst, die zwischen einer Eintrittszone (32), in die die Vorformlinge (14) durch die Versorgungsvorrichtung (24) zugeführt werden, und einer Austrittszone (34), die in eine so genannte Transportzone (36) der Anlage (10) mündet, angeordnet sind,
- eine erste Transportvorrichtung (38), die in der Transportzone (36) angeordnet und dazu bestimmt ist, die thermisch konditionierten Vorformlinge (14) von der Austrittszone (34) des Ofens (28) bis zu einer so genannten Versorgungszone (40) einer Gießeinheit (42) zu transportieren,
- eine Gießeinheit (42), die ein Rad (44) enthält, das mit mehreren Gießformen (46), die am Umfang verteilt sind, und zugeordneten Blas- oder Ziehblasmitteln ausgerüstet ist, wobei das Rad (44) rotatorisch in der Weise angetrieben wird, dass jede Gießform (46) einen Transformationszyklus von der Versorgungszone (40) bis zu einer so genannten Evakuierungszone (48) durchläuft,
- eine zweite Transportvorrichtung (50), die in der Transportzone (36) angeordnet ist und dazu bestimmt ist, die von der Evakuierungszone (48) der Gießeinheit (42) erhaltenen Aufnahmebehälter (12) zu einem Ausgang (S) der Anlage (10) zu transportieren, und
- wenigstens eine Schutzumschließung (52), die ein Gehäuse bildet, das in der Weise angeordnet ist, dass es wenigstens die Gießeinheit (42), die Transportzone (36) und die Austrittszone (34) des Ofens (28) der Anlage (10) umgibt, wobei die Umschließung (52) insbesondere um das Rad (44) eine Umfangszone (54) in "U"-Form begrenzt, die sich von der Versorgungszone (40) bis zu der Evakuierungszone (48) erstreckt und nacheinander eine so genannte erste rechte seitliche Zone (Z1), eine so genannte zweite hintere Zone (Z2) und eine dritte linke seitliche Zone (Z3) umfasst,
wobei die Anlage (10) ein System (70) zum Einblasen gefilterter Luft in die Umschließung (52) umfasst, um darin einen Überdruck zu erzeugen, indem ein Luftstrom (F) in sie gerichtet wird, **dadurch gekennzeichnet, dass** der Luftstrom wahlweise wenigstens in die erste Zone (Z1) eingeleitet wird, die der Innenvolumenzone der Umschließung (52) entspricht, in der ein durch die Drehung des Rades (44) eingeführter Luftstrom (C) beginnt, wobei die erste Zone (Z1) longitudinal zwischen einem seitlichen Teil des die Gießformen (46) tragenden Rades (44) und einer Wand (56) der Umschließung (52), die sich gegenüber befindet und sich einerseits von der Versorgungszone (40) der Gießeinheit (42) transversal nach hinten erstreckt und sich andererseits vertikal vom Boden (66) zur Decke (68) der Umschließung (52) erstreckt, enthalten ist, derart, dass der Luftstrom (C), der durch die Drehung des Rades (44) hervorgerufen wird, entweder aus der gefilterten Luft gebildet ist, um die Gefahr einer Kontamination durch von der Luft beförderte Partikel, insbesondere die Kontamination der Vorformlinge (14) in der Austrittszone (34) des Ofens (28), zu vermeiden.

2. Anlage (10) nach Anspruch 1, **dadurch gekennzeichnet, dass** das Lufteinblassystem (70) dazu ausgelegt ist, einen Strom (F) gefilterter Luft in die zweite Zone (Z2) und/oder in die dritte Zone (Z3) der Umschließung (52) zu richten, die komplementär zu der ersten Zone (Z1) sind und die das Rad (44) umgebende Umfangszone (54) definieren.

3. Anlage (10) nach einem der Ansprüche 1 oder 2, **dadurch gekennzeichnet, dass** das Lufteinblassystem (70) dazu ausgelegt ist, einen Strom (F) gefilterter Luft in eine vierte Zone (Z4) der Umschließung (52) zu richten, die wenigstens die Transportzone (36) und die Austrittszone (34) des Ofens (28) umfasst.

4. Anlage (10) nach einem der Ansprüche 1 bis 3, **dadurch gekennzeichnet, dass** das Lufteinblassystem (70) dazu ausgelegt ist, unabhängig von der Drehung des Rades (44) ständig einen Strom (F) gefilterter oder steriler Luft in alle Zonen (Z1, Z2, Z3, Z4) oder einen Teil der Zonen der Umschließung (52) zu richten, derart, dass einerseits der Hygienegrad in der Umschließung (52) bewahrt wird, indem ein Überdruck aufrechterhalten wird, wenn das Rad (44) in Ruhe ist, und dass andererseits die Partikelkontamination des hervorgerufenen Luftstroms (C) im Betrieb durch die Drehung des Rades (44), das wie ein Ventilator wirkt, vermieden wird, wobei der Luftstrom (C), der hauptsächlich durch die durch das System (70) eingeblasene gefilterte Luft gebildet ist, nacheinander zunächst die Umfangszone (54), die durch die erste, die zweite und die dritte Zone (Z1), (Z2) und (Z3) gebildet ist, und dann die Transportzone (36) und schließlich die Austrittszone (34) des Ofens (28) durchläuft.

5. Anlage (10) nach einem der vorhergehenden Ansprüche, **dadurch gekennzeichnet, dass** das Lufteinblassystem (70) Ventilationsmittel (72) umfasst, die Filtrationsmitteln (74) zugeordnet sind, die dazu bestimmt sind, die Luft zu filtern, bevor sie in die Umschließung (52) gerichtet wird.

6. Anlage (10) nach Anspruch 5, **dadurch gekennzeichnet, dass** die Filtrationsmittel (74) des Systems (70) durch wenigstens einen Filter des Typs "ULPA" oder "HEPA" gebildet sind.

7. Anlage (10) nach einem der vorhergehenden Ansprüche, **dadurch gekennzeichnet, dass** das Lufteinblassystem (70) wenigstens ein Element (76) umfasst, das an der Außenseite der Umschließung (52) an wenigstens einer der vertikalen Wände (56, 58, 60, 62) und/oder an der die Decke bildenden horizontalen Wand (68) angebracht ist, wobei die Umschließung (52) Öffnungen (78) aufweist, um das Einblasen des Stroms (F) gefilterter Luft in einem zunächst laminaren Strom, der im Allgemeinen vertikal von oben nach unten verläuft, zu ermöglichen.

8. Anlage (10) nach Anspruch 7, **dadurch gekennzeichnet, dass** die Elemente (76) des Lufteinblassystems (70) strukturell in die Umschließung (52) integriert sind, derart, dass sie die die Decke bildende Wand (68) bilden.

9. Anlage (10) nach einem der vorhergehenden Ansprüche, wobei die Umschließung (52) eine Schleusenkammer (80) aufweist, die dazu bestimmt ist, einer Bedienungsperson zu ermöglichen, von außerhalb der Anlage (10) auf den Innenraum der Umschließung (52) zuzugreifen, um insbesondere Operationen an dem Rad (44) wie etwa Einstellungen oder Wechsel der Gießformen (46) vorzunehmen,
**dadurch gekennzeichnet, dass** das Lufteinblassystem (70) wahlweise einen Strom (F) gefilterter Luft in die Schleusenkammer (80) richten kann, derart, dass jegliche äußere Kontamination des durch die Umschließung (52) begrenzten Innenvolumens verhindert wird, wenn die Schleusenkammer (80) verwendet wird.

10. Anlage (10) nach Anspruch 9, **dadurch gekennzeichnet, dass** die Schleusenkammer (80) in der zweiten Zone (Z2) der Umfangszone (54) angeordnet ist, die sich hinter dem Rad (44) und diametral entgegengesetzt zu der Transportzone (36) befindet.
